**Europäisches Patentamt**

**European Patent Office**

**Office européen des brevets**

(19)

(11) **EP 0 891 107 A1**

(12) **EUROPÄISCHE PATENTANMELDUNG**

(43) Veröffentlichungstag:
**13.01.1999 Patentblatt 1999/02**

(51) Int. Cl.⁶: **H04Q 3/66**, H04L 12/56

(21) Anmeldenummer: **98112861.4**

(22) Anmeldetag: **10.07.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.07.1997 DE 19729628**

(71) Anmelder:
**SIEMENS AKTIENGESELLSCHAFT**
**80333 München (DE)**

(72) Erfinder:
• **Hillermeier, Claus, Dr.**
**80637 München (DE)**
• **Nagel, Klaus, Dr.**
**81669 München (DE)**

(54) **Verfahren und Vorrichtung zur rechnergestützten Bildung einer Routing-Tabelle aus schleifenfreien Teil-Routing-Tabellen für ein Telekommunikationsnetz**

(57)    Die schleifenfreien Teil-Routing-Tabellen werden zu mehreren Gesamt-Routing-Tabellen kombiniert. Für die Gesamt-Routing-Tabellen werden folgende Verfahrensschritte durchgeführt, bis ein vorgebbares Abbruchkriterium erfüllt ist:

-    es wird für jede Gesamt-Routing-Tabelle ein Qualitätswert ermittelt,
-    es wird mindestens eine neue Gesamt-Routing-Tabelle gebildet.

Eine Gesamt-Routing-Tabelle wird als Routing-Tabelle ausgewählt.

**Beschreibung**

Die Erfindung betrifft die Generierung einer Routing-Tabelle für ein Telekommunikationsnetz.

Ein Telekommunikationsnetzwerk weist mindestens einen Quellknoten und mindestens einen Zielknoten und eine beliebige Anzahl von weiteren Knoten auf. Die Kommunikation, d.h. die Übertragung von Daten, erfolgt von dem Quellknoten über weitere Knoten zu dem Zielknoten.

Dabei gilt es, für die Übertragung der Daten ein möglichst optimales Routing zu gewährleisten, um eine möglichst schnelle und verlustarme Kommunikation zu ermöglichen.

Unter Routing ist im weiteren zu verstehen, einen Weg von dem Quellknoten zu dem Zielknoten über die weiteren Knoten zu ermitteln und die Daten über diesen Weg zu leiten, so daß die Daten von dem Quellknoten zu dem Zielknoten gelangen.

Unter einer Teil-Routing-Tabelle ist im folgenden bei zielknotenabhängigem Routing die Gesamtheit der Routingsinformation, d.h. alle Routingvektoren, für einen Zielknoten zu verstehen. Bei quellknoten- und zielknotenabhängigem Routing ist unter einer Teil-Touting-Tabelle die Gesamtheit der Routingsinformation, d.h. alle Routingvektoren, für ein Quellknoten-Zielknoten-Paar zu verstehen.

Aus [1] ist eine Routingstrategie bekannt, die als „Fixed-Alternative Routing" (FAR) bezeichnet wird. Bei diesem Verfahren ist (sind) in jedem Knoten i des Telekommunikationsnetzwerks eine (oder mehrere) Liste(n), die auch als Routingvektor(en) bezeichnet werden, gespeichert, deren Einträge aus Nachbarknoten des jeweiligen Knotens i bestehen. Ein bis zum Knoten i geführter Verbindungsweg wird zum ersten freien Knoten dieses Vektors fortgesetzt.

Unter einem Nachbarknoten eines Knotens i ist ein Knoten zu verstehen, der mit dem Knoten i direkt verbunden ist.

Für festes ('fixed') Routing ohne Alternativwege gibt es etablierte Algorithmen zum Finden der k kürzesten und schleifenfreien Wege. Für FAR ist Schleifenfreiheit aufgrund der Routingalternativen an jedem Knoten schwerer zu überprüfen und sicherzustellen. Aus [2] ist eine Methode zum Generieren schleifenfreier Teil-Routing-Tabelle in einem nichthierarchischen Telekommunikationsnetzwerk bekannt, die für quell-und zielknotenabhängiges Routing anwendbar ist. Dabei werden mittels bekannter Verfahren aus der Graphentheorie k kürzeste und jeweils in sich schleifenfreie Wege (zwischen Quellknoten und Zielknoten) erzeugt. Bereits während der Suche nach den kürzesten Wegen wird die Schleifenfreiheit der durch Zusammensetzen dieser Wege entstehenden Teil-Routing-Tabellen als zusätzliche Randbedingung mitgeführt.

Ein Quellknoten-Zielknoten-Paar wird im folgenden auch als Ende-zu-Ende-Paar (EEP) bezeichnet.

Für hierarchische Telekommunikationsnetzwerke mit FAR sind keine Methoden zur Konstruktion schleifenfreier Routing-(oder Teil-Routing-)Tabellen bekannt.

Unter einem hierarchischen Telekommunikationsnetzwerk ist ein Telekommunikationsnetzwerk mit folgenden Eigenschaften zu verstehen:

- Das Telekommunikationsnetzwerk ist in hierarchische Ebenen aufgeteilt. Die Quellknoten und die Zielknoten liegen auf der niedrigsten Hierarchieebene.
- Jeder Knoten hat mindestens eine Verbindung zu einem Knoten der nächsthöheren Hierarchieebene.
- Über die oberste Hierarchieebene lassen sich ein Quellknoten und ein Zielknoten stets miteinander verbinden (hierarchische Distanz zweier Knoten).
- Routing darf anschaulich nur in Form eines umgekehrten „U" erfolgen, d.h. einmal die Hierarchiestruktur (evtl. nur ein Stück) nach oben und zurück. Ein „Zick-Zack"-Routing zwischen Hierarchieebenen ist auszuschließen.

Ein Beispiel für ein hierarchisches Telekommunikationsnetzwerk ist das öffentliche Telekommunikationsnetzwerk [3].

Eine Anwendung eines Genetischen Algorithmus (GA) auf das Problem der Routing-Optimierung ist aus [4] bekannt.

Das Verfahren ist lediglich auf das Prinzip der „Originating-Office-Control with Spill-Forward" anwendbar, eine für Private Netze ungeeignete Routingstrategie (unter Originating Office Control ist zu verstehen, daß die Routingkontrolle beim Quellknoten liegt).

Ein erheblicher Nachteil dieses Verfahrens ist darin zu sehen, daß die Kodierung von Routing-Tabellen zu einer Suche im Raum aller formal hinschreibbaren Routing-Tabellen führt, von denen die überwältigende Mehrheit den Nebenbedingungen, vor allem der Bedingung der Schleifenfreiheit, nicht genügt. Aufgrund dieser ineffizienten Suche ist das aus [4] bekannte Verfahren konventionellen, heuristischen Verfahren zur Routingoptimierung unterlegen.

Grundlagen über genetische Algorithmen sind in [5] beschrieben. Genetische Algorithmen (GA) sind ein von der Evolution in der Natur inspiriertes Verfahren zur Minimumsuche in komplexen Suchräumen. Das Verfahren basiert auf der gleichzeitigen Suche durch eine ganze Menge - in Anlehnung an die Biologie 'Population' genannt - von möglichen Lösungen, in dem vorliegenden Fall Routing-Tabellen. Jede solche Lösung - im Rahmen des Populationskonzepts auch als 'Individuum' bezeichnet - ist als Symbolstring ('Genotyp') kodiert. Die Population verändert sich iterativ unter dem Einfluß 'Genetischer', d.h. auf die Symolstrings wirkender, Operatoren. Am Ende eines jeden Iterationsschritts werden die Symbolstrings zu Routing-Tabellen dekodiert, und ihr Zielfunktionswert wird ausgewertet. Die Individuen mit den niedrigsten Zielfunktionswerten werden dazu auserwählt ('Selektion'), durch paarweise Kombination ihrer Symbolstrings ('Rekombination') zu Eltern neuer Individuen zu werden. Dabei werden Symbole des neuerzeugten Strings stochastisch verändert ('Mutation'), um lokale Minima zugunsten noch besserer Lösungen wieder verlassen zu können. Die erzeugten Individuen ersetzen vergleichsweise schlechte Individuen der alten Population. Nach einer - von der Problemkomplexität abhängigen - Zahl von Generationen werden alle Individuen der Population einander sehr ähnlich. Die beste Routing-Tabelle aus dieser Endpopulation ist das Ergebnis des Genetischen Algorithmus.

Somit liegt der Erfindung das Problem zugrunde ein Verfahren und eine Vorrichtung zur rechnergestützten Bildung einer Routing-Tabelle aus schleifenfreien Teil-Routing-Tabellen für ein Telekommunikationsnetz anzugeben, welche effizienter sind als das bekannte Verfahren.

Das Problem wird durch das Verfahren gemäß Patentanspruch 1 sowie durch die Vorrichtung gemäß Patentanspruch 11 gelöst.

Eine Routing-Tabelle wird aus schleifenfreien Teil-Routing-Tabellen für ein Telekommunikationsnetz unter Verwendung eines Rechners gebildet, indem die schleifenfreien Teil-Routing-Tabellen zu mehreren Gesamt-Routing-Tabellen kombiniert werden. Für die Gesamt-Routing-Tabellen werden folgende Verfahrensschritte durchgeführt, bis ein vorgebbares Abbruchkriterium erfüllt ist:

- es wird für jede Gesamt-Routing-Tabelle ein Qualitätswert ermittelt,
- es wird mindestens eine neue Gesamt-Routing-Tabelle gebildet.

Eine Gesamt-Routing-Tabelle wird als Routing-Tabelle ausgewählt.

Die Vorrichtung zur Bildung einer Routing-Tabelle aus schleifenfreien Teil-Routing-Tabellen für ein Telekommunikationsnetz weist eine Prozessoreinheit auf, die derart eingerichtet ist, daß die oben beschriebenen Schritte durchgeführt werden.

Durch die Erfindung wird eine effektive Optimierung der Gesamt-Routing-Tabellen erreicht, da ein ineffektives Absuchen unzulässiger, d.h. nicht schleifenfreier Routinglösungen von vornherein vermieden wird. Somit ist das Verfahren erheblich schneller und mit geringerem Rechenzeitbedarf durchführbar.

Vorteilhafte Weiterbildungen der Erfindung ergeben sich aus den abhängigen Ansprüchen.

Eine Vereinfachung der Erfindung wird in einer Weiterbildung dadurch erreicht, daß die iterativen Verfahrensschritte gemäß einem genetischen Algorithmus erfolgen.

In einer nächsten Weiterbildung ist es vorteilhaft, jedem Quellknoten/Zielknoten-Paar mehrere schleifenfreie Teil-Routing-Tabellen zuzuordnen. Diese Teil-Routing-Tabellen werden mit einem Kennzeichnungswert eindeutig markiert. Alle Teil-Routing-Tabellen mit gleichem Kennzeichnungswert werden jeweils zu einer Gesamt-Routing-Tabelle kombiniert, und ein Durchschnittswert aller Qualitätswerte wird ermittelt. Die Gesamt-Routing-Tabelle, deren Qualitätswert unter einer vorgebbaren unteren Schranke liegt, vorzugsweise um einen Prozentanteil unter dem Durchschnittswert, wird gelöscht.

Durch diese Weiterbildung werden die erzielbaren Ergebnisse der Erfindung erheblich verbessert.

Im Rahmen der Erfindung können verschiedenste Varianten eines genetischen Algorithmus eingesetzt werden, z.B. das sogenannte „2 aus 3"-Verfahren oder auch die $(\mu+\lambda)$-Strategie, die im Rahmen der Erläuterung der Ausführungsbeispiele näher erläutert werden.

Die Erfindung ist für zwei Ausprägungen von FAR anwendbar:

- FAR, bei dem das Routing nur aufgrund des Zielknotens, nicht aufgrund des Quellknotens erfolgt. Bei diesem zielknotenabhängigen Routing existiert an jedem weiteren Knoten pro Zielknoten genau ein Routingvektor.
- FAR, bei dem das Routing jeweils spezifisch für Zielknoten und Quellknoten erfolgt. Hierfür ist an jedem weiteren Knoten pro Quellknoten-Zielknoten-Paar ein eigener Routingvektor gespeichert. Mit diesem quell- und zielknotenabhängigen Routing lassen sich aufgrund seiner Flexibilität mehr Alternativwege realisieren.

Die Erfindung ist geeignet sowohl für

- hierarchische Telekommunikationsnetzwerke, bei denen das Routing durch die Beachtung der Knotenhierarchie eingeschränkt ist, als auch für
- nichthierarchische Netze, bei denen solche Hierarchieeinschränkungen nicht existieren.

Durch eine Verbesserung des Routings kann die Erfindung die Leistungsfähigkeit (oder, falls gewünscht, die Ausfallsicherheit) eines bestehenden Telekommunikationsnetzes erhöhen.

Darüberhinaus eignet sich die Erfindung auch, wenn sich in einem bereits dimensionierten Telekommunikationsnetz das Verkehrsaufkommen (gegenüber dem bei der Planung zugrundegelegten) ändert, oder wenn spätere Messungen eine Abweichung von den Auslegungswerten ergeben. Netztopologie und Bündelstärken lassen sich zu einem solchen Zeitpunkt meist nicht mehr ändern und können daher nicht in die Optimierung einbezogen werden.

Die Erfindung kann weiterhin als Teil eines Verfahrens verwendet werden, bei dem Dimensionierung und Routing zusammen dadurch optimiert werden, daß zunächst auf der Basis eines (vorläufigen) Routing die Dimensionierung optimiert wird, dann auf der Basis dieser Dimensionierung das Routing optimiert wird, damit wiederum die Dimensionierung optimiert wird, etc. .

Es sei angemerkt, daß sich das im Rahmen der Erfindung entwickelte Verfahren auch auf Multi-Hour-Routing-Probleme anwenden läßt. Eine Multi-Hour-Routinglösung trägt einem über den Tag hinweg variierenden Verkehrsangebot Rechnung.

Anschaulich kann die Erfindung darin gesehen werden, daß eine optimierte Routing-Tabelle in einem Optimierungsverfahren aus mehreren Gesamt-Routing-Tabellen ermittelt wird, die jeweils aus schleifenfreien Teil-Routing-Tabellen gebildet werden.

Ausführungsbeispiele der Erfindung sind in den Figuren dargestellt und werden im weiteren näher erläutert.

Es zeigen

Figur 1    eine Skizze eines Telekommunikationsnetzwerks mit einem Knoten, dem ein Routingvektor zugeordnet ist;

Figur 2    eine Skizze eines Telekommunikationsnetzwerks mit Potentialzuordnung bei zielknotenabhängigem Routing;

Figur 3    eine Skizze eines hierarchischen Telekommunikationsnetzwerks mit Potentialzuordnung bei zielknotenabhängigem Routing;

Figur 4    eine Skizze eines Telekommunikationsnetzwerks, in dem eine Anologie zu einem elektrischen Netzwerk dargestellt ist;

Figur 5    ein Ablaufdiagramm mit einzelnen Verfahrensschritten zur Erzeugung einer schleifenfreien Teil-Routing-Tabelle;

Figur 6    eine Skizze des Aufbaus einer Gesamt-Routing-Tabelle aus Teil-Routing-Tabellen;

Figur 7    ein Ablaufdiagramm, in dem die einzelnen Verfahrensschritte einer ersten Möglichkeit zum Ermitteln der Routing-Tabelle dargestellt sind;

Figur 8    ein Ablaufdiagramm, in dem die einzelnen Verfahrensschritte einer zweiten Möglichkeit zum Ermitteln der Routing-Tabelle dargestellt sind;

Figur 9    eine Skizze eines Rechners, mit dem eine Routing-Tabelle erzeugt wird.

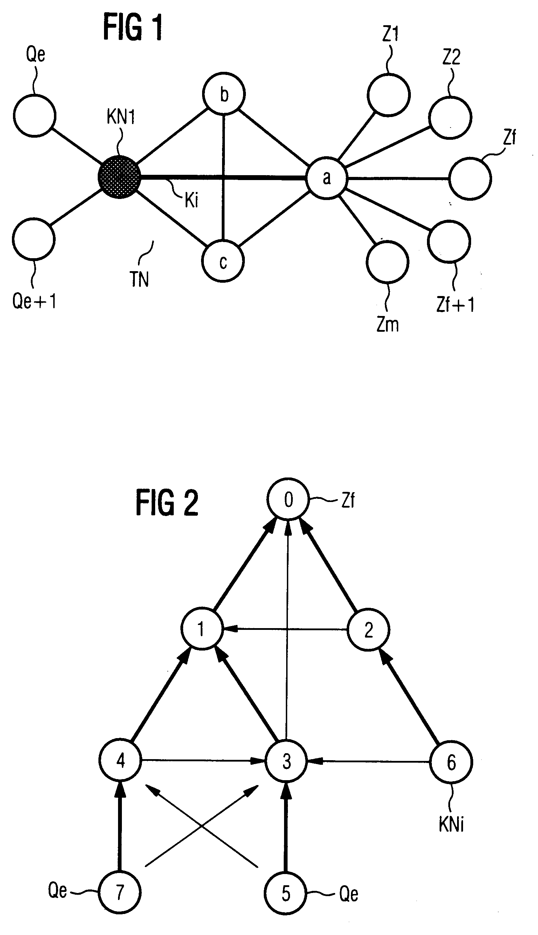

Figur 1 zeigt eine Skizze eines Telekommunikationsnetzwerks TN mit Quellknoten Qe (e = 1, ..., n) und Zielknoten Zf (f = 1, ..., m). Ein Quellknoten Qe bzw. ein Zielknoten Zf repräsentiert jeweils ein Kommunikationsendgerät, z.B. ein Telefon oder ein Telefaxgerät oder auch einen Rechner, oder diejenige Vermittlungseinheit des Telekommunikationsnetzwerks TN, an die das betreffende Kommunikationsendgerät angeschlossen ist.

Das Telekommunikationsnetzwerk TN weist ferner Vermittlungseinheiten repräsentierende Knoten KNl (l = 1,..., s) auf.

Zur einfacheren Darstellung werden sowohl die Quellknoten Qe, die Zielknoten Zf als auch die Knoten KNl mit einem ersten Index i oder einem zweiten Index j gekennzeichnet. Ein Knoten wird dann mit dem Index i indiziert, wenn von dem Knoten eine Verbindung zu einem Nachbarknoten, der mit dem zweiten Index j gekennzeichnet wird, ausgeht.

Die Knoten KNi sind über Kanten Kij miteinander verbunden, wobei die Orientierung der Kante Kij derart ist, daß die Verbindung von Knoten i zu dem Knoten j gerichtet ist. Jedem Knoten KNi ist ein Routingvektor Ri zugeordnet und gespeichert, in dem Nachbarknoten des Knotens KNi angegeben sind, mit denen der Knoten KNi verbunden ist. Für den in Figur 1 mit KN1 bezeichneten Knoten ergibt sich aus der Topologie des Telekommunikationsnetzwerks TN, daß der Knoten KH1 mit Nachbarknoten a, b, c verbunden ist. Wenn der Routingvektor Ri gegeben ist durch

$$Ri \; = \; \begin{pmatrix} a \\ b \\ c \end{pmatrix},$$

so bedeutet dies, daß die in dem Knoten KNi ankommenden Daten an die Knoten a, b, c weitergeleitet werden können, und zwar mit von a nach c abnehmender Präferenz.

Bei zielknotenabhängigem Routing ist jedem Knoten KNi des Telekommunikationsnetzwerks TN jeweils pro Zielknoten ZF ein spezifischer Routingvektor Ri zugeordnet. Bei quellknoten- und und zielknotenabhängigem Routing ist

4

jedem Knoten KNi des Telekommunikationsnetzwerks TN jeweils pro Quellknoten-Zielknoten-Paar ein spezifischer Routingvektor Ri zugeordnet.

Jedem Knoten KNi des Telekommunikationsnetzwerks TN ist ein Routingvektor Ri zugeordnet.

Die Gesamtheit aller Routingvektoren Ri des Telekommunikationsnetzwerks TN wird als Routing-Tabelle bezeichnet. Eine Teilmenge der Routing-Tabelle wird im weiteren als Teil-Routing-Tabelle bezeichnet. Eine Teil-Routing-Tabelle umfaßt bei zielabhängigem FAR die Gesamtheit der für einen bestimmten Zielknoten Zf spezifischen Routingvektoren Ri, bei quell- und zielabhängigem FAR die Gesamtheit der für ein Quellknoten-Zielknoten-Paar spezifischen Routingvektoren Ri.

Die Routing-Tabelle ergibt sich somit aus den gebildeten Teil-Routing-Tabellen.

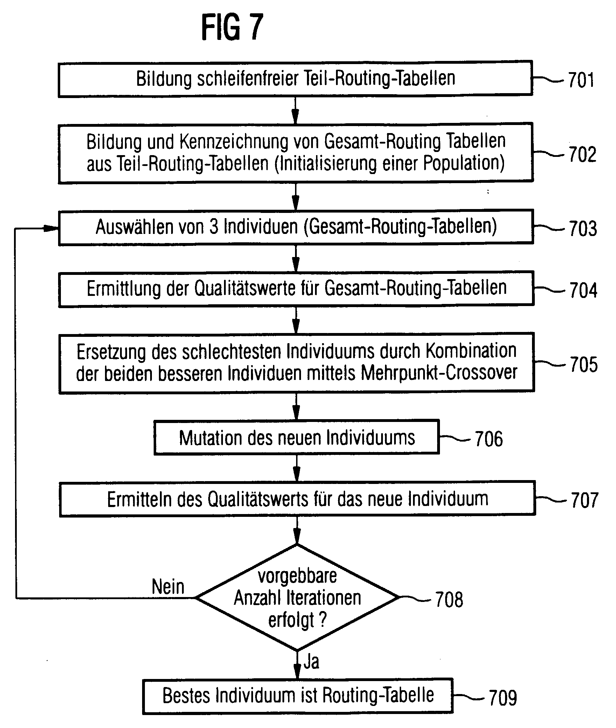

**Generierung von schleifenfreien und zu dem Telekommunikationsnetz TN topologiekonformen Teil-Routing-Tabellen T als Bausteine für eine Gesamt-Routing-Tabelle (Schritt 701) (vgl. Fig. 7)**

Um eine effiziente Optimierung bei der Ermittlung der Routing-Tabelle zu erreichen, verwendet die Erfindung die (für die Routingstrategie jeweils) kleinste Untereinheit einer Routing-Tabelle, die auf Schleifenfreiheit überprüft werden kann, als Bausteine für die Konstruktion von Routing-Tabellen. Diese Untereinheit wird im folgenden als Teil-Routing-Tabelle bezeichnet. Verwendet werden ausschließlich Teil-Routing-Tabellen, die mit der Netztopologie verträglich und schleifenfrei sind.

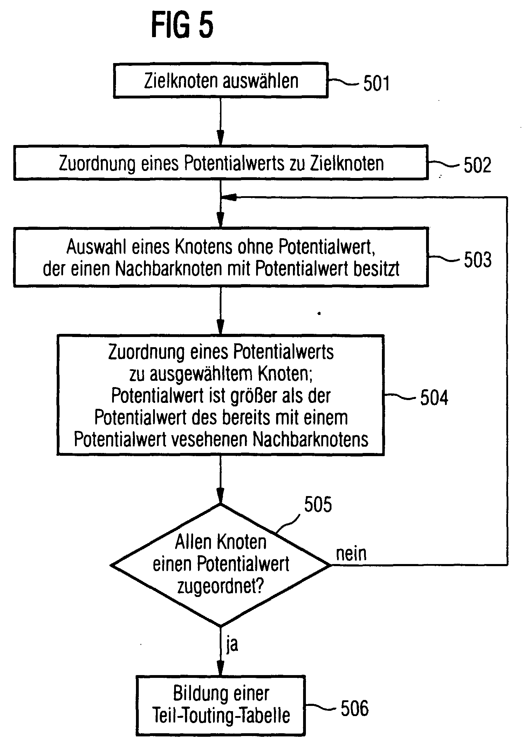

In Figur 5 ist ein Ablaufdiagramm dargestellt mit den einzelnen Verfahrensschritten zur Erzeugung einer schleifenfreien Teil-Routing-Tabelle.

In einem ersten Schritt 501 wird ein Zielknoten Zf ausgewählt. Dem Zielknoten Zf wird ein Zielpotentialwert 0 zugeordnet (Schritt 502).

In einem weiteren Schritt 503 wird ein Knotens KNi ausgewählt, dem noch kein Potentialwert zugeordnet wurde, und der mit mindestens einem Knoten verbunden ist, dem bereits ein Potentialwert zugeordnet wurde.

Dem ausgewählten Knoten wird ein Potentialwert zugeordnet, der größer ist als der Potentialwert, der dem verbundenen Knoten zugeordnet wurde (Schritt 504). Ist der ausgewählte Knoten KNi mit mehreren Knoten KNi verbunden, denen bereits ein Potentialwert zugeordnet wurde, so ist der kleinste dieser zugeordneten Potetialwerte durch den neu zu vergebenden Potentialwert zu übertreffen.

In einem Überprüfungsschritt 505 wird überprüft, ob jedem Knoten KNi des Telekommunikationsnetzwerks TN ein Potentialwert zugeordnet wurde. Ist dies nicht der Fall, existieren demnach noch Knoten KNi ohne zugeordneten Potentialwert, so wird zu Schritt 503 verzweigt und es wird ein weiterer Knoten ohne zugeordneten Potentialwert ausgewählt. Ist jedem Knoten KNi ein Potentialwert zugeordnet, so wird in einen Verfahrensschritt 506 verzweigt, in dem mindestens eine Teil-Routing-Tabelle gebildet wird.

Anschaulich erfolgt die Zuordnung der Potentialwerte derart, daß

- den niedrigsten Potentialwert der Zielknoten Zf aufweist, da es sonst passieren kann, daß zu einem Knoten KNi geroutet wird, dessen Potential niedriger ist als das des Zielknotens Zf und von dem aus der Zielknoten Zf nicht mehr erreichbar ist,

- 'Tote Enden', d.h. Knoten KNi, die nicht der Zielknoten Zf sind und von denen aus keine Verbindung mehr zu einem Knoten niedrigeren Potentials besteht, nicht auftreten dürfen, (Streng genommen folgt aus dieser Bedingung die vorangegangene Bedingung), und

- wenn verschiedenen Knoten KNi der gleiche Potentialwert zugeordnet wird, kann das obige Routing-Wahlkriterium nach der Größe der Potentialdifferenz zu Mehrdeutigkeiten führen. Diese Situation läßt sich entweder dadurch vermeiden, daß von vornherein jeder Potentialwert nur an einen einzigen Knoten KNi vergeben wird, oder daß gleiche Potentialwerte durch einen (z.B. stochastischen) kleinen additiven Störterm verschieden gemacht werden.

Eine Teil-Routing-Tabelle ergibt sich aus der Menge von Knoten KNi, die ausgehend von dem Quellknoten Qe über Knoten KNi mit monoton fallenden Potentialwerten zu dem Zielknoten Zf führen.

Anschaulich entspricht diese Vorgehensweise in Analogie zum Fluß eines elektrischen Stromes aufgrund eines elektrischen Potentialunterschiedes oder zum Fließen von Wasser aufgrund eines Unterschiedes im Gravitationspotential einem Routing jeweils nur zu einem Knoten KNi mit niedrigerem Potential.

Um aus der Menge von Nachbarknoten mit niedrigerem Potential einen Routingeintrag (bzw. die Einträge des Routingvektors Ri und ihre Reihenfolge) zu wählen, bedarf es eines zusätzlichen Kriteriums. Eine Möglichkeit ist die zufällige Auswahl aus der Menge der Nachbarknoten mit niedrigerem Potential.

Das Routing in Richtung des Potentialgefälles erzwingt die Schleifenfreiheit, weil Daten nie zu einem bereits passierten Knoten KNi zurückgeroutet werden können.

Im folgenden werden Beispiele des Verfahrens für verschiedene Routingarten beschrieben.

**Rein zielabhängiges Routing**

Für jeden Zielknoten Zf sind folgende Schritte durchzuführen:
Allen Knoten KNi werden gemäß folgendem Algorithmus Potentialwerte zugeordnet:

1. Beginne mit dem Zielknoten Zf: Potentialwert = 0;
2. Führe so lange, bis allen Knoten KNi ein Potential zugewiesen wurde, folgende Schritte durch:
a) Wähle einen Knoten KNi aus, dem bereits ein Potential zugewiesen wurde.
b) Wähle einen weiteren Knoten aus, der mit dem ausgewählten Knoten KNi direkt verbunden ist und dem noch kein Potentialwert zugeordnet wurde. Falls dies nicht möglich ist, gehe zurück zu a) .
c) Ordne dem weiteren Knoten den Potentialwert { ( Maximum bereits zugeordneter Potentiale) + 1 } zu.

Ein Beispiel des obigen Verfahrens zur Potentialzuordnung ist in seinem Ergebnis in Figur 2 gezeigt.

**Quell- und zielabhängiges Routing**

Das Verfahren ist entsprechend dem Verfahren für rein zielabhängiges Routing, mit folgenden zwei Änderungen:
In dem Schritt 1. werden sowohl dem Zielknoten Zf der Potentialwert 0 zugeordnet als auch dem Quellknoten Qe der Potentialwert $\infty$ (in der praktischen Umsetzung: eine sehr große Zahl) gesetzt.
In dem Schritt 2.a) wird der Quellknoten Qe ausgenommen, da sonst unsinnige Zuordnungen wie Quelle ($\infty$)-----X($\infty$ +1) vorkommen können.
Das Verfahren der Potentialzuordnung ist für jedes Quellknoten-Zielknoten-Paar separat durchzuführen.

**Hierarchisches Telekommunikationsnetzwerk TN**

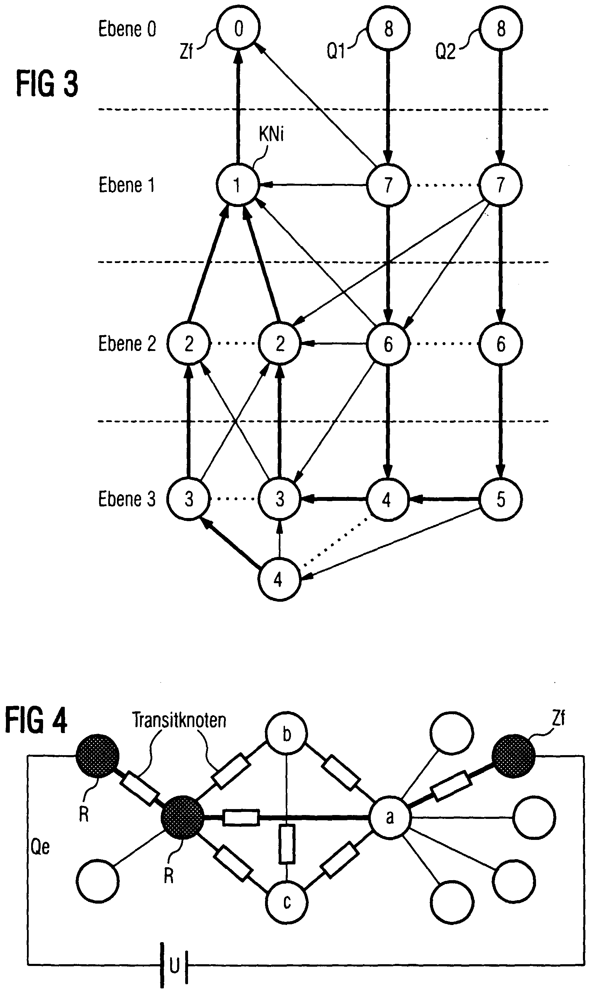

Aufgrund der Hierarchieeinschränkung wird eine Variante des oben beschriebenen Verfahrens bei einem hierarchischen Telekommunikationsnetzwerk TN eingesetzt:
Die Potentialzuordnung erfolgt Hierarchieebenenweise.
Dabei geht man, ausgehend vom Zielknoten Zf (Teilnehmerebene), zunächst bis zur obersten Hierarchieebene hoch („1. Durchlauf") und anschließend wieder zur Teilnehmerebene (Ebene auch des Quellknotens Qe) zurück („2. Durchlauf").
Beim 1. Durchlauf wird pro Hierarchieebene nur einer Teilmenge der Knoten KNi ein Potentialwert zugeordnet. Jeder Knoten KNi dieser Teilmenge muß mit mindestens einem der potentialbehafteten Knoten KNi der Ebene darunter verbunden sein. Die Auswahl der Teilmenge kann zufällig oder aufgrund anderer Kriterien (z.B. aufgrund des Kennzahlenweges) erfolgen.
Der Potentialwert wird, wie schon oben beschrieben, pro Knoten um den Wert 1 erhöht. Eine solche Zuordnung erlaubt Routing innerhalb einer Hierarchieebene.
Anschließend geht man von der obersten Ebene wieder zurück, wobei in jeder Ebene zunächst alle Anlagen ein Potential haben müssen, bevor man eine Ebene weiter nach unten geht.
Eine Beispielzuordnung von Potentialwerten nach obigem Verfahren zeigt Figur 3.
Es sei angemerkt, daß dieses Verfahren sowohl für rein zielabhängiges wie auch für quell- und zielabhängiges Routing anwendbar ist. Bei rein zielabhängigem Routing ist die Zuordnungsprozedur pro Zielknoten Zf nur einmal durchzuführen (siehe Figur 3). Bei quell- und zielabhängigem Routing kann die Auswahl der Knotenteilmengen beim 1.Durchlauf jeweils spezifisch für ein Quellknoten-Zielknoten-Paar durchgeführt werden.

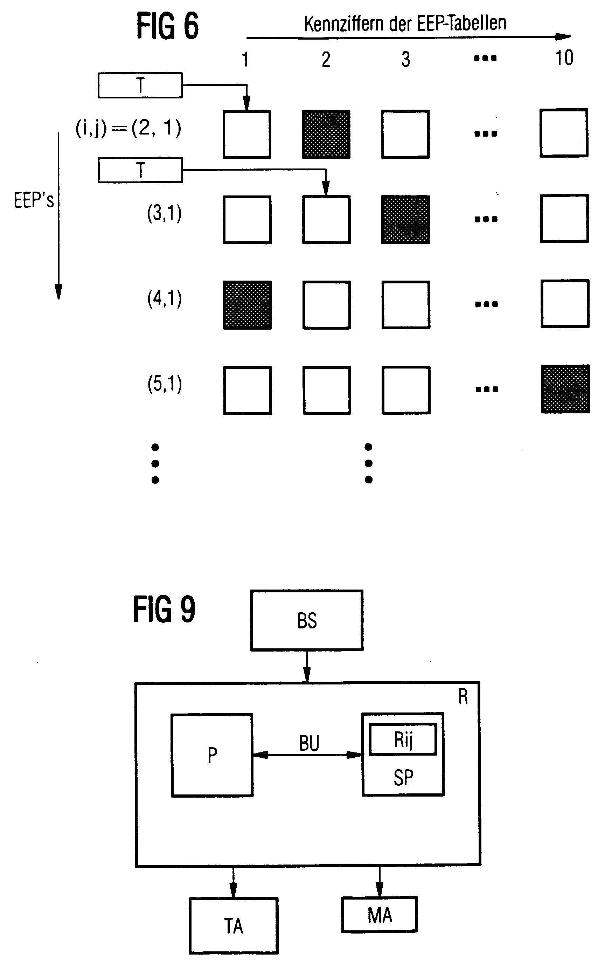

In Figur 6 ist ein Rechner R dargestellt, mit dem das oben beschriebene Verfahren durchgeführt wird. Der Rechner R weist einen Prozessor P sowie einen Speicher SP auf, der über einen Bus BU mit dem Prozessor P verbunden ist.
In dem Speicher SP sind die einzelnen Routingvektoren Ri gespeichert. Der Prozessor P ist derart programmiert, daß die oben beschriebenen Verfahren durchgeführt werden können. Ferner ist der Rechner R mit einem Bildschirm BS sowie mit einer Tastatur TA und einer Computer-Maus MA gekoppelt.
Im weiteren werden Alternativen zu den oben beschriebenen Ausführungsbeispielen dargestellt:
Der Zielpotentialwert ist allgemein beliebig wählbar, muß nur das Minimum aller Potentialwerte in dem Telekommunikationsnetzwerk TN sein.
Weitere mögliche Auswahlkriterien für den einen Routingeintrag aus der Menge von Nachbarknoten mit niedrigerem Potential (bzw. den Einträgen des Routingvektors Ri und ihre Reihenfolge) sind:

- Ordnung der Nachbarknoten mit niedrigerem Potential nach ihrem „Abstand" zum Zielknoten Zf, d.h. nach der Anzahl der Knoten KNi, die beim kürzesten Weg zum Zielknoten Zf zwischen dem Knoten KNi und dem Zielknoten Zf liegen. Der Knoten KNi mit dem kleinsten Abstand ist der Ersteintrag des Routingvektors Ri;

- Ordnung der Nachbarknoten mit niedrigerem Potential nach ihrer Potential-Differenz zum aktuellen Knoten KNi (größte Differenz zuerst).

Es sind auch noch weitere Kriterien möglich. Beispielsweise gibt die im weiteren beschriebene Methode, Knotenpotentiale durch die (virtuelle) Umformung des Telekommunikationsnetzes TN in ein elektrisches Widerstandsnetzwerk zu gewinnen, ein weiteres/alternatives Auswahlkriterium für Routingeinträge (und ihre Reihenfolge) an die Hand, nämlich die Stärke des in Richtung des Nachbarknotens fließenden Stromes, wie im weiteren erläutert wird.

Grundidee bei dieser Variante ist die Analogie des Telekommunikationsnetzes TN zu einem elektrischen Widerstandsnetzwerk. Die Topologie des Telekommunikationsnetzes TN wird in ein elektrisches Widerstandsnetzwerk übersetzt, indem in jede direkte Verbindungsleitung ein virtueller Widerstand R (bzw. der reziproke Wert, der elektrische Leitwert) eingefügt wird (vgl. Figur 4).

Das Potential des Zielknotens Zf wird auf den Wert 0 gesetzt und eine Spannung zwischen Quellknoten Qe und Zielknoten Zf angelegt, so daß ein Gesamtstrom der Stärke 1 vom Quellknoten Qe zum Zielknoten Zf fließt. Unter Anwendung des Ohmschen Gesetzes erhält man die Knotenpotentiale $U_i$ als Lösung eines linearen Gleichungssystems (Kirchhoffsche Knotenregel):

Knotenregel für i.ten Knoten:

$$\sum_{j \neq i} L_{ij}\left(U_i - U_j\right) = \begin{cases} 1, & \text{falls } i = \text{Quelle} \\ -1, & \text{falls } i = \text{Ziel} \\ 0 & \text{sonst} \end{cases} , \text{ wobei}$$

$L_{ij} = L_{ji}$ der Leitwert der Verbindung zwischen Knoten i und j ist. Falls eine solche Verbindung nicht existiert, ist $L_{ij}$ = 0 zu setzen.

Auf Basis der auf diese Weise berechneten Knotenpotentiale kann man nun mittels einer der in oben aufgeführten Regeln die Routingvektoren Ri generieren.

Das „Stromnetz-Analogie-Verfahren" ermöglicht aber noch eine alternative Methode, die sich die Information der (durch die einzelnen Verbindungen fließenden) Stromstärken zunutze macht. Die Stromverteilung, die aus den Knotenpotentialen durch Anwendung des Ohmschen Gesetzes folgt, kann durch folgende Vorschrift in ein Routing übersetzt werden:

Ordne an jedem Knoten KNi, der nicht Zielknoten Zf ist, die ausgehenden Ströme der Größe nach und trage die entsprechenden Nachbarknoten in dieser Reihenfolge in die Routingliste des Knotens KNi ein. Da Ströme nur in Richtung niedrigerer Potentiale fließen, ist so die Schleifenfreiheit ebenfalls gewährleistet.

Bei der Übersetzung der Topologie des Telekommunikationsnetzwerks TN in ein elektrisches Widerstandsnetzwerk können die virtuellen Widerstände R aufgrund folgender (alternativ anzuwendenden) Kriterien gewählt werden:

- stochastisch
- alle Leitwerte gleich ($\rightarrow$ kürzester Weg wird angestrebt)
- Leitwerte proportional (oder nichtlineare, monoton wachsende Funktion) zu den Bündelstärken der Knotenverbindungen.

Bei Anwendung der beiden letzten Kriterien kann man durch Aufprägen einer additiven stochastischen Störung erreichen, daß unterschiedliche Routing-Teil-Tabellen erzeugt werden.

Das „Stromnetz-Analogie-Verfahren" läßt sich auch bei rein zielabhängigem Routing anwenden. Hierfür wird der Netztopologie ein virtueller Quellknoten Qe hinzugefügt, der zu allen Knoten KNi außer dem Zielknoten Zf eine direkte Verbindungsleitung besitzt. Dieser Quellknoten Qe wird auf das positive Potential U gesetzt.

Für die Wahl der Leitwerte in den Verbindungen zum virtuellen Quellknoten Qe kommen die oben beschriebenen Kriterien in Frage. Eine Alternative ist, den Leitwert zwischen dem virtuellen Quellknoten Qe und dem Knoten KNi proportional (oder gemäß nichtlinearem Zusammenhang) zum Verkehrsangebot für das Knotenpaar (KNi, Zielknoten Zf) zu wählen.

Zur Auswahl eines Knotens aus der Menge derjenigen Knoten, die selber bereits einen Potentialwert und die mindestens einen Nachbarknoten ohne Potential haben (im folgenden 'Auswahlmenge' genannt), können mehrere alternative Auswahlkriterien eingesetzt werden:

- Stochastische Wahl. In dieser Variante kann das Verfahren durch jeweils neue Initialisierung des Zufallsgenerators immer wieder unterschiedliche schleifenfreie Teil-Routing-Tabellen generieren.
- Wähle als Knoten denjenigen Knoten der Auswahlmenge mit dem niedrigsten Potential.
- Lege über die Auswahlmenge eine Wahrscheinlichkeitsverteilung, die ihren höchsten Wert beim Knoten mit dem niedrigsten Potential annimmt. Würfle den Knoten entsprechend dieser Wahrscheinlichkeitsverteilung.

Die beiden ersten Varianten ergeben sich als entartete Spezialfälle der dritten Variante.

Alternativ kann die Wahrscheinlichkeitsverteilung auch nach dem Abstand der Knoten zum Zielknoten Zf ausgerichtet werden, d.h. ihren höchsten Wert bei demjenigen Knoten KNi annehmen, der den geringsten Abstand zum Zielknoten Zf hat.

Eine alternative Möglichkeit zur Potentialzuordnung bei einem hierarchischen Telekommunikationsnetzwerk TN ist darin zu sehen, daß beim 1. Durchlauf alle ausgewählten Knoten einer Ebene jeweils auf das gleiche Potential gesetzt werden. Beim Übergang zur nächsthöheren Ebene wird das Potential um den Wert 1 erhöht. Diese Zuordnung vermeidet Routing innerhalb einer Ebene über mehrere Knoten.

### Quellknoten- und zielknotenabhängiges Routing

Im Rahmen der Routingstrategie des Quellknoten- und zielknotenabhängigen Routings ergibt sich z.B. folgende Abschätzung des Raums formal hinschreibbarer Routing-Tabellen (d.h. des formalen Suchraums):

An jedem der N Knoten eines gegebenen Telekommunikationsnetzes TN sind $O(N^2)$ (d.h. von der Ordnung $N^2$) Routingvektoren hinterlegt, einer pro Quellknoten-Zielknoten-Paar (im folgenden auch als Ende-zu-Ende-Paar (EEP) bezeichnet). Die Maximalzahl der Einträge pro Routingvektor ist meist a priori festgelegt, ein typischer Wert ist 3. Die gesamte Routinginformation, die im Netz gespeichert ist, umfaßt also $O(N^3)$ integerwertige Vektoren der Länge 3. Rein formal sind die einzelnen Routingeinträge aus den Zahlen {1,2, ... , N} zu wählen, so daß sich die formale Anzahl möglicher Routing-Tabellen zu

$$O(N^{(3 \cdot N^3)})$$

ergibt.

Die kleinste Untereinheit einer Routing-Tabelle, die die Prüfung der Schleifenfreiheit erlaubt, ist bei quellknoten- und zielknotenabhängigem Routing durch die Gesamtheit der Routinginformation für ein Quellknoten-Zielknoten-Paar (im folgenden als Ende-zu-Ende-Paar (EEP) bezeichnet) gegeben.

Die gesamte Routinginformation für ein EEP (i,j) wird im folgenden als EEP-Tabelle bezeichnet und umfaßt jeweils $O(N)$ Routingvektoren (einen pro Knoten), da jeder Knoten als potentieller Transitknoten für eine Kommunikationsverbindung von einem Quellknoten i nach einem Zielknoten j fungiert.

### Rein zielknotenabhängiges Routing

Die kleinste Untereinheit einer Routing-Tabelle, die die Prüfung der Schleifenfreiheit erlaubt, ist bei rein zielorientiertem Routing die Gesamtheit der Routinginformation für einen Zielknoten, im folgenden als Zielknoten-Tabelle bezeichnet. Wie eine EEP-Tabelle besteht auch eine Zielknoten-Tabelle aus $O(N)$ Routingvektoren (einem pro Knoten), da jeder Knoten als potentieller Transitknoten für eine Kommunikationsverbindung zum Zielknoten fungiert.

### Zusammensetzen der Teil-Routing-Tabellen T zu Gesamt-Routing-Tabellen

Die Methode, wie Teil-Routing-Tabellen T zu Gesamt-Routing-Tabellen zusammenzusetzen sind, hängt davon ab, ob rein zielknotenabhängiges Routing oder quellknoten- und zielknotenabhängiges Routing eingesetzt wird.

### Quellknoten- und zielknotenabhängiges Routing

Für jedes EEP wird - beispielsweise mittels einer der beiden oben genannten Verfahren - ein Pool von z.B. $\mu = 10$ schleifenfreien EEP-Tabellen gebildet, die von 1 bis 10 durchnumeriert werden (vgl Figur 6). Indem man für jedes EEP eine EEP-Tabelle aus dem jeweiligen Pool auswählt, erhält man eine vollständige Routingtabelle. Jede so darstellbare Routing-Tabelle kann auf eindeutige Weise durch eine Sequenz von $O(N^2)$ Kennziffern (je eine pro EEP) mit Werten aus {1,2,3,...,10} bezeichnet oder kodiert werden. Figur 6 zeigt, wie eine Gesamt-Routing-Tabelle mit der Bezeichnungssequenz (2, 3, 1, 10, ...) nach Art eines Baukastensystems aus einzelnen dunkel markierten EEP-Tabellen zusammengesetzt wird.

In einem späteren Schritt wird die bestmögliche Routing-Tabelle ermittelt, die sich als Kombination von EEP-Tabellen aus dem Pool bilden läßt. Da dieses Verfahren den Suchraum einschränkt - Mutationen im Rahmen des Genetischen Algorithmus erlauben es, diesen eingeschränkten Suchraum wieder zu verlassen - ist es vorteilhaft, wenn die einzelnen EEP-Tabellen für sich genommen bereits „möglichst gut" sind.

Daher kann es die Lösungsqualität verbessern, wenn Maßnahmen ergriffen werden, um die Qualität der im Pool enthaltenen EEP-Tabellen zu steigern.

Ein mögliches Verfahren hierzu sei im folgenden aufgezeigt:

Da mit den meisten der unten beschriebenen Bewertungsmethoden keine einzelnen EEP-Tabellen bewertet werden können, sondern nur eine ganze Gesamt-Routing-Tabelle, werden alle EEP-Tabellen mit der Kennziffer 1 zu einer Routing-Tabelle Zusammengesetzt, analog für die Kennziffern 2, ..., μ. Die auf diese Weise gebildeten μ Gesamt-Routing-Tabellen werden, wie unten erläutert, mit einem Qualitätswert bewertet, und der Durchschnitt der μ Qualitätswerte wird bestimmt. Hat beispielsweise die aus den EEP-Tabellen der Kennziffer 1 geformte Gesamt-Routing-Tabelle einen besonders schlechten Qualitätswert, so deutet dies darauf hin, daß die EEP-Tabellen mit Kennziffer 1 im Mittel schlechter sind als der Durchschnitt der erzeugten EEP-Tabellen. Daher werden in diesem Fall alle EEP-Tabellen der Kennziffer 1 wieder verworfen und durch frisch generierte ersetzt. Diese werden erneut zu einer Routing-Tabelle zusammengesetzt und mit einem Qualitätswert bewertet. Ist der Qualitätswert besser als der ermittelte Durchschnittswert, so werden die EEP-Tabellen der Kennziffer 1 für den Pool akzeptiert, ansonsten wird das Spiel wiederholt. Durch diese Vorselektion verbessert sich die durchschnittliche Qualität des Pools von EEP-Tabellen.

**Rein zielknotenabhängiges Routing**

Eine Gesamt-Routing-Tabelle wird in analoger Weise zu oben aus schleifenfreien und topologiekonformen Zielknoten-Tabellen aufgebaut. Eine derart gebildete Gesamt-Routing-Tabelle wird als Sequenz von N Kennziffern (je eine pro Zielknoten) kodiert.

**Bewertung der Gesamt-Routing-Tabellen**

Die Qualität jeder generierten Gesamt-Routing-Tabelle wird durch einen Zahlenwert ausgedrückt, der einen Vergleich der Güte verschiedener Routinglösungen erlaubt.

Dieser Qualitätswert wird so formuliert, daß bessere Gesamt-Routing-Tabellen kleinere Qualitätswerte besitzen, so daß die optimale Gesamt-Routing-Tabellen (ausgewählte Routing-Tabelle) dem globalen Minimum der Zielfunktion entspricht. Die Formulierung als Minimierungsproblem stellt keine Einschränkung der Allgemeingültigkeit der Erfindung dar, da jedes Minimierungsproblem äquivalent ist zu einem Maximierungsproblem des Negativen der Zielfunktion. Die Wahl der Zielfunktion richtet sich nach den Anforderungen, die der Netzbetreiber an das Telekommunikationsnetz TN stellt. Gebräuchliche Anforderungen sind Zuverlässigkeit, d.h. Toleranz gegenüber Fehlern und Leitungsausfällen, sowie Verkehrsdurchsatz (Netzwerkperformance). Ein mögliches Verfahren zur Ermittlung der Netzperformance ist es, das Verkehrsangebot in Form einer Verkehrsmatrix $A_{ij}$ (jeweils ein Wert pro Quellknoten-Zielknoten-Paar (i,j) ) zu speichern und mit der Link-Decomposition-Methode (siehe [1] ) die Ende-zu-Ende-Blockierungen zu berechnen, die sich bei Anwendung der zu bewertenden Routingtabelle ergeben. Der Terminus 'Ende-zu-Ende-Blockierung' (EEB) bezeichnet die Wahrscheinlichkeit, daß eine für ein Ende-zu-Ende-Paar gewünschte Verbindung wegen Netzüberlastung nicht zustandekommt.

Die zu minimierende Zielfunktion f ist die mit dem jeweiligen Verkehrsaufkommen gewichtete Summe der EEB's für alle Ende-zu-Ende-Paare (i,j) :

$$f = \sum_{i,j=1}^{N} A_{ij} \cdot EEB_{ij}.$$

Falls ein Multi-Hour-Routingproblem vorliegt, hängt das Verkehrsangebot $A_{ij}$ von der Tageszeit ab. Dem kann durch eine zusätzliche Summation über die Tageszeiten in der obigen Zielfunktion f Rechnung getragen werden. Das restliche Lösungsverfahren ist für Multi-Hour-Routingprobleme unverändert anwendbar.

Im Rahmen der Erfindung ist es auch möglich, Nebenbedingungen zu berücksichtigen, die von einer Routinglösung erfüllt werden müssen. Eine solche Nebenbedingung ist beispielsweise die Einhaltung von bei der Netzkonfiguration geforderten Grade-of-service (GOS) -Werten :

$$EEB_{ij} \leq GOS_{ij} \; \forall \; \text{Verkehrspaare (i,j.}$$

Eine Methode zur Einbeziehung von Nebenbedingungen ist die Berücksichtigung mittels Straftermen. Dabei wird die Nebenbedingung relaxiert, indem GOS-verletzende Routinglösungen zwar zugelassen, aber mit einem Strafterm belegt werden. Dies führt zu einer erweiterten Zielfunktion der Form:

$$f = \sum_{i,j=1}^{N} \left\{ A_{ij} * EEB_{ij} + \alpha_{ij} * \left( EEB_{ij} - GOS_{ij} \right) \right\} \,,$$

wobei: $\qquad \alpha_{ij} = \left\{ \begin{array}{ll} \beta_{ij}, & \text{falls} \quad EEB_{ij} > GOS_{ij} \\ 0 & \text{sonst} \end{array} \right.$

Mit $\beta_{ij}$ sind vorgebbare Gewichtsfaktoren bezeichnet, die vorzugsweise proportional zu dem Verkehrsangebot $A_{ij}$ gewählt werden oder gleich einer wählbaren Konstanten $\beta$ (z.B. $\beta = 10$).

**Suche nach der optimalen Gesamt-Routing-Tabelle, der Routing-Tabelle, mittels eines Genetischen Algorithmus**

Im Raum sämtlicher Gesamt-Routing-Tabellen, die sich aus den erzeugten Pool-EEP-Tabellen zusammensetzen lassen, wird nach derjenigen mit dem niedrigsten Zielfunktionswert (d.h. dem globalen Optimum) gesucht.

Dieses Problem ist ein kombinatorisches Optimierungsproblem und kann mit verschiedenen Verfahren zur kombinatorischen oder ganzzahligen Optimierung gelöst werden.

Im folgenden wird ein stochastisches Optimierungskonzept, die Genetische Algorithmen, beschrieben, das sich zur Suche nach der optimalen Gesamt-Routing-Tabelle, der Routing-Tabelle, besonders eignet.

Alternative Lösungsverfahren für diese Teilaufgabe sind z.B. das Absuchen des Entscheidungsbaums durch die sog. branch-and-bound-Methode oder stochastische Verfahren wie der Metropolis-Algorithmus.

Die im weiteren verwendete Nomenklatur bezieht sich auf das quellknoten- und zielknotenabhängigen Routing. Ersetzt man jeweils den Begriff 'EEP-Tabelle' durch den Begriff 'Zielknoten-Tabelle', so läßt sich das Verfahren eins-zu-eins auf rein zielorientiertes Routing übertragen.

Wie oben beschrieben wurde, werden die Gesamt-Routing-Tabellen, die sich aus topologiekonformen und schleifenfreien Pool-EEP-Tabellen zusammensetzen, jeweils durch eine Sequenz ganzzahliger Kennziffern (je eine pro EEP) eindeutig gekennzeichnet (Schritt 702). Diese Sequenz wird im Rahmen des Genetischen Algorithmus (GA) als Symbolstring (auch genetischer Kode genannt) der Gesamt-Routing-Tabelle (im Rahmen des GA auch als Individuum bezeichnet) verwendet.

Zur Initialisierung der Population (Schritt 702) wird für alle EEP's nach einem der oben beschriebenen angeführten Verfahren ein Pool von $\mu$ (z.B. $\mu = 10$ ) EEP-Tabellen erzeugt, die jeweils von 1 bis $\mu$ durchnumeriert werden.

Im nächsten Schritt wird aus dem Pool der EEP-Tabellen eine Population von P (mit $P > \mu$, z.B. $P = 30$) Routinglösungen erzeugt. Jedes Individuum ist als String von Zeigerverweisen auf eine der $\mu$ Pool-EEP-Tabellen kodiert. Die ersten $\mu$ Individuen setzen sich aus EEP-Tabellen gleicher Kennziffern zusammen, d.h. ihre Strings lauten (1,1,1,...), (2,2,2,...), ..., ($\mu$,$\mu$,$\mu$,...). Die Stringeinträge der restlichen (P-$\mu$) Individuen werden aus den Zahlen {1,2, ... , $\mu$} gewürfelt.

Die resultierende Population dient als Ausgangspunkt eines evolutionären Iterationsverfahrens. Aus den bekannten Evolutionsverfahren wurden im Rahmen der Erfindung zwei Ansätze ausgewählt und so modifiziert, daß sie sich für die Ermittlung der Routing-Tabelle eignen.

Für die Gesamt-Routing-Tabellen werden die Qualitätswerte ermittelt (Schritt 704).

**„2 aus 3"-Verfahren**

Jeder Iterationsschritt des Genetischen Algorithmus besteht aus folgenden Teilschritten (vgl. Figur 7):

- Wähle stochastisch 3 Individuen aus der Population aus und ordne sie entsprechend ihrer Qualitätswerte (Schritt 703);
- Ersetze das schlechteste Individuum (mit maximalem Qualitätswert) durch eine Rekombination der beiden besseren Individuen (Schritt 705);
- Rekombination geschieht als Mehrpunkt-Crossover. Würfle hierfür eine kleine Zahl i. Würfle weiterhin i Bruchstellen im genetischen String. Nun wird das neue Individuum ('Kind') nach dem Reißverschlußprinzip aus den beiden Eltern zusammengesetzt: Bis zur ersten Bruchstelle erbt es den String des Vaters, von da ab bis zur zweiten Bruchstelle den String der Mutter, usw.

- Mutiere jeden Stringeintrag des Kindes mit kleiner Wahrscheinlichkeit (z.B.: 1/N), d.h. ersetze ihn durch eine aus {1,2, ... , μ} gewürfelte Zahl. μ bezeichnet die Kennziffer einer Teil-Routing-Tabelle T für dasjenige EEP, das der Position im String entspricht (Schritt 706);
- Übersetze den String des neuen Individuums in eine Routing-Tabelle, die sich entsprechend der Zeigerverweise des Strings aus den einzelnen EEP-Tabellen des Pools zusammensetzt;
- Bewerte diese Routingtabelle entsprechend der Zielfunktion mit ihrem Qualitätswert (Schritt 707);
- Nach einer vorgegebenen Zahl solcher Iterationen wird der GA abgebrochen (Schritt 708). Die beste Routinglösung aus der Population ist das Ergebnis des GA (Schritt 709).

In dem beschriebenen Genetischen Algorithmus wirken sowohl die Rekombination als auch die Mutation auf der Ebene der Zeigervariablen. Demgemäß beschränkt sich die Suche nach dem Optimum auf den Raum derjenigen Routing-Tabellen, die sich als Kombinationen von EEP-Tabellen aus dem Pool darstellen lassen. Eine Erweiterung der Suche im Rahmen dieses GA stößt auf folgende Schwierigkeit: Um rechenzeitintensive Zielfunktions-Auswertungen zu sparen, merkt sich der Algorithmus jedes Bewertungsergebnis eines Individuums. Würde man nun einfach eine EEP-Tabelle des Pools verändern (mutieren), so müßten alle Individuen, deren Strings einen Zeigerverweis auf diese EEP-Tabelle enthalten, neu bewertet werden. Dadurch würde die Zahl benötigter Zielfunktions-Auswertungen und damit die Rechenzeit stark aufgebläht.

Um dennoch Mutationen auch auf der Ebene der EEP-Tabellen zu ermöglichen, wird der obige Algorithmus alle P Schritte (d.h. nachdem sich die Population im Mittel einmal erneuert hat) angehalten.

Sequentiell werden alle EEP's auf folgende Weise bearbeitet. Für jedes EEP werden alle möglichen Werte {1,2, ... , μ} für die Zeigervariable danach geprüft, ob sie in einem der Genstrings der Population (an der diesem EEP entsprechenden Position) vorkommen. Ist dies nicht der Fall, wird die entsprechende EEP-Tabelle des Pools offensichtlich in keine der Routinglösungen der Population eingebaut.

Sie kann daher durch eine neu generierte EEP-Tabelle ersetzt werden, ohne daß sich gleichzeitig ein Individuum der Population verändert und neu bewertet werden muß.

Auf die EEP-Tabellen, die im Rahmen dieser periodischen 'Pool-Revision' ausgetauscht werden, wird in der aktuellen Population kein Bezug via Zeigervariable genommen. Eingang in Individuen können diese neuen EEP-Tabellen nur durch Mutationen der Zeigervariablen gemäß Schritt 706 finden. Dadurch wird die Wirksamkeit der Mutation durch 'Pool-Revision' abgeschwächt, und die Suche konzentriert sich hauptsächlich auf den durch den anfänglichen EEP-Pool vorgegebenen Unterraum. Im Fall großer Netze - und damit sehr großer Suchräume - kann diese Einschränkung durchaus zum Vorteil ausschlagen.

Eine unmittelbarere Art der Mutation von EEP-Tabellen ermöglicht der im folgenden erläuterte Algorithmus.

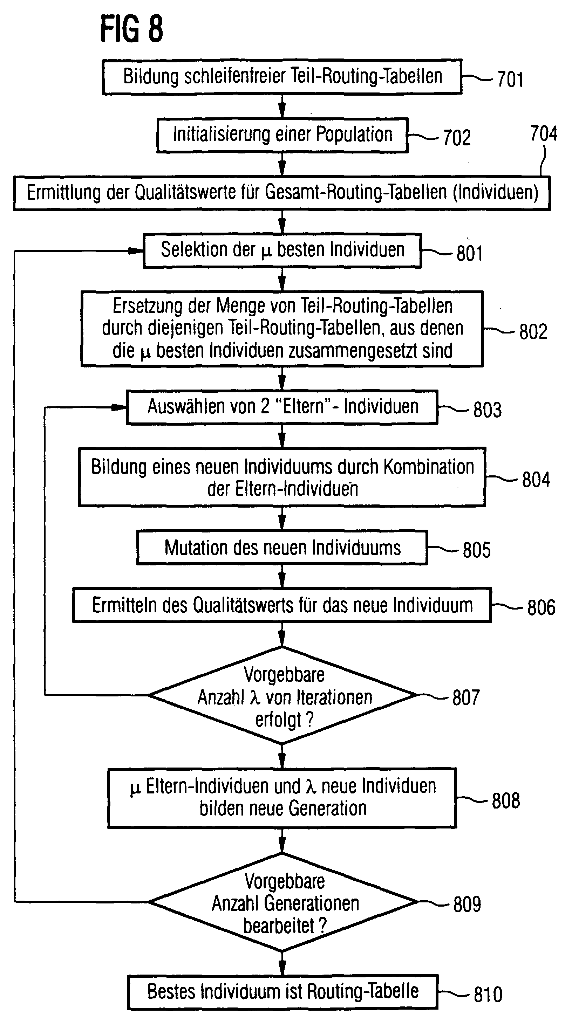

## (μ+λ)-Strategie (vgl. Figur 8)

Ausgangsbasis ist eine Population von P Individuen, die wie oben beschrieben erzeugt wird. Bei der (μ+λ)-Strategie wird iterativ die bestehende Population durch eine neue ersetzt. Die nach k solchen Iterationsschritten entstandene Population wird als k-te Generation bezeichnet. Jeder Generationenwechsel umfaßt folgende Teilschritte:

a) Selektion: Erkläre die μ besten Individuen der Population zu Eltern der folgenden Generation und numeriere sie von 1 bis μ (Schritt 801).

b) Ersetze den bisherigen Pool von EEP-Tabellen durch die EEP-Tabellen der selektierten Eltern (Schritt 802). Überschreibe zu diesem Zweck alle EEP-Tabellen des Pools, die die Kennziffer 1 tragen, durch die entsprechenden EEP-Tabellen des Elternindividuums mit Nummer 1, analog für 2 bis μ. Anschließend müssen die Genstrings der Eltern natürlich ebenfalls zu (1,1,1,...), (2,2,2,...), ... , (μ,μ,μ,...) geändert werden.

c) Wähle zufällig zwei Eltern aus (Schritt 803). Rekombiniere ihre Genstrings zum Genstring eines Kind-Individuums (Schritt 804) (wie im „2 aus 3"-Verfahren).

d) Übersetze den String des neuen Individuums in eine Routing-Tabelle.

e) Mutation (Schritt 805): Würfle eine Zahl i zwischen den Werten 0 und N (wobei die Wahrscheinlichkeit, eine Zahl nahe dem Wert 0 zu würfeln, größer ist als die Wahrscheinlichkeit, eine Zahl nahe N zu würfeln). Wähle sodann i EEP's zufällig aus und ersetze in der Gesamt-Routing-Tabelle des Kind-Individuums die entsprechenden EEP-Tabellen durch neue, die mittels Variation der Widerstände nach der Stromnetzanalogie generiert werden.

f) Bewerte die resultierende Routingtabelle entsprechend der Zielfunktion (Schritt 806).

g) Wiederhole die Schritte c) bis f) solange, bis λ Kinder erzeugt sind (Schritt 807). Die μ Eltern plus λ Kinder bilden die neue Generation (Schritt 808). λ wird gleich (P-μ) gewählt, so daß jede Generation aus P Individuen besteht wie die Anfangspopulation.

Es wird eine vorgebbare Anzahl von Generationen bearbeitet (Schritt 809).

Das nach Abbruch des Verfahrens beste Individuum bildet die Routing-Tabelle (Schritt 810).

Der Hauptunterschied der (μ+λ)-Strategie zum „2 aus 3"-Verfahren liegt im Fortschreiten in Form von Generationen. Durch die Selektion von μ Eltern schrumpft die Population für einen Moment auf μ Individuen zusammen. In diesem Moment kann der Pool von EEP-Tabellen unter Einbeziehung mutierter EEP-Tabellen neu definiert werden, ohne daß weitere Individuen neu bewertet werden müssen.

Alternativ zur Mutation gemäß e), also dem vollständigen Austausch einzelner EEP-Tabellen, ist auch eine andere Form der Mutation einsetzbar. Dabei werden die zu mutierenden EEP-Tabellen ausgewählt wie in in dem Schritt e). Anders als in dem Schritt e) heißt Mutation einer EEP-Tabelle in diesem Zusammenhang aber nicht, daß diese EEP-Tabelle vollständig ersetzt wird, sondern daß sie lediglich modifiziert wird. Hierfür wird ein Transitknoten zufällig gewählt. In der Routingliste dieses Transitknotens wird die Reihenfolge der Routingalternativen einer zufälligen Permutation unterworfen. Natürlich wird diese Mutation nur für Netze, deren Routingvektoren mehr als einen Eintrag haben, tatsächlich wirksam.

Ein Unterschied der (μ+λ)-Strategie zum „2 aus 3"-Selektionsverfahren liegt in der größeren Diversität innerhalb der Population. Diese Diversität ist auf die Art der Mutation zurückzuführen, bei der neue EEP-Tabellen in den Pool mit aufgenommen werden. Die Diversität bleibt meist für eine große Zahl von Iterationen erhalten, so daß mit steigender Zahl von Zielfunktionsauswertungen auch der Wert der Zielfunktion noch weiter verbessert werden kann.

Die Daten werden entsprechend der ermittelten Routing-Tabelle in dem Telekommunikationsnetz übertragen.

In Figur 9 ist ein Rechner R dargestellt, mit dem das oben beschriebene Verfahren durchgeführt wird. Der Rechner R weist einen Prozessor P sowie einen Speicher SP auf, der über einen Bus BU mit dem Prozessor P verbunden ist.

In dem Speicher SP sind die einzelnen Routingvektoren Ri gespeichert. Der Prozessor P ist derart programmiert, daß die oben beschriebenen Verfahren durchgeführt werden können. Ferner ist der Rechner R mit einem Bildschirm BS sowie mit einer Tastatur TA und einer Computer-Maus MA gekoppelt.

Im weiteren werden Alternativen zu den oben beschriebenen Ausführungsbeispielen dargestellt:

Die schleifenfreie Teil-Routing-Tabellen T können z.B. auch gemäß dem in [2] beschriebenen Verfahren zum Generieren schleifenfreier Teil-Routingtabellen in nichthierarchischen Telekommunikationsnetzwerken gebildet werden.

Anschaulich kann die Erfindung darin gesehen werden, daß eine optimierte Routing-Tabelle in einem Optimierungsverfahren aus mehreren Gesamt-Routing-Tabellen ermittelt wird, die aus schleifenfreien Teil-Routing-Tabellen T gebildet werden.

Im Rahmen dieses Dokuments wurden folgende Veröffentlichungen zitiert:

[1] A. Girard, Routing and Dimensioning in Circuit-Switched Networks, Addison-Wesley, S. 35 - 37, 1990
[2] H. Hartmann, H. He, Z. Bai, D. Weber, Engineering and Routing for Modular Private ISDNs: Models, New Concepts, Fast Algorithms and Advanced Tools, Proceedings of Networks '96, Sydney, Australia, 1996
[3] A. Girard, Routing and Dimensioning in Circuit-Switched Networks, Addison-Wesley, S. 37 - 39, 1990
[4] M. C. Sinclair, The Application of a Genetic Algorithm to Trunk Network Routing Table Optimisation, 10th UK Teletraffic Symposium, Martelsham Heath, UK, IEEE Conference, S. 2/1-6, 1993
[5] H. P. Schwefel, Evolution and Optimum Seeking, John Wiley & Sons Inc., S. 105 - 121, 1995

**Patentansprüche**

1. Verfahren zur rechnergestützten Bildung einer Routing-Tabelle aus schleifenfreien Teil-Routing-Tabellen für ein Telekommunikationsnetz,

- bei dem die schleifenfreien Teil-Routing-Tabellen zu mehreren Gesamt-Routing-Tabellen kombiniert werden,
- bei dem für die Gesamt-Routing-Tabellen folgende Verfahrensschritte durchgeführt werden, bis ein vorgebbares Abbruchkriterium erfüllt ist:

   -- es wird für jede Gesamt-Routing-Tabelle ein Qualitätswert ermittelt,
   -- es wird mindestens eine neue Gesamt-Routing-Tabelle gebildet,

- bei dem eine Gesamt-Routing-Tabelle als Routing-Tabelle ausgewählt wird.

2. Verfahren nach Anspruch 1,

- bei dem zu Beginn des Verfahrens eine Menge schleifenfreier Teil-Routing-Tabellen gebildet wird, und
- bei dem die Ermittlung der Routing-Tabelle im Raum der Kombinationen aus Teil-Routing-Tabellen der Menge erfolgt.

3. Verfahren nach Anspruch 2,
   bei dem mit vorgebbarer Wahrscheinlichkeit mindestens eine Teil-Routing-Tabelle der Menge verändert wird oder durch mindestens eine neu generierte Teil-Routing-Tabelle ersetzt wird.

4. Verfahren nach einem der Ansprüche 1 bis 3,
   bei dem die iterativen Verfahrensschritte gemäß einem genetischen Algorithmus erfolgen.

5. Verfahren nach Anspruch 4,

   - bei dem jedem Quellknoten/Zielknoten-Paar mehrere schleifenfreie Teil-Routing-Tabellen zugeordnet werden,
   - bei dem die Teil-Routing-Tabellen mit einem Kennzeichnungswert eindeutig markiert werden,
   - bei dem von jedem Quellknoten/Zielknoten-Paar Teil-Routing-Tabelle T mit gleichem Kennzeichnungswert zu Gesamt-Routing-Tabelle kombiniert werden,
   - bei dem ein Durchschnittswert aller Qualitätswerte ermittelt wird,
   - bei dem die Gesamt-Routing-Tabelle, deren Qualitätswert unter einer vorgebbaren unteren Schranke liegt, gelöscht wird.

6. Verfahren nach einem der Ansprüche 1 bis 5,
   bei dem der Qualitätswert f nach folgender Vorschrift ermitelt wird:

$$f = \sum_{i,j=1}^{N} A_{ij} \cdot EEB_{ij}, \text{ wobei mit}$$

   - i, j Knotenindizes bezeichnet werden,
   - N eine Anzahl berückichtigter Knoten bezeichnet wird,
   - $A_{ij}$ ein Verkehrsangebot in Form einer Verkehrsmatrix bezeichnet wird,
   - $EEB_{ij}$ eine Wahrscheinlichkeit dafür bezeichnet wird, daß eine für ein Ende-zu-Ende-Knotenpaar angeforderte Verbindung aufgrund einer Überlastung des Telekommunikationsnetzes nicht zustande kommt.

7. Verfahren nach einem der Ansprüche 1 bis 6,
   bei dem bei der Netzkonfiguration geforderte Grade-of-Service-Werte eingehalten werden.

8. Verfahren nach Anspruch 7,
   bei dem die Einhaltung der Grade-of-Service-Werte $GOS_{ij}$ durch Berücksichtigung folgender Nebenbedingung erfolgt:

$$EEB_{ij} \leq GOS_{ij} \ \forall \ (i,j)$$

   bei dem der Qualitätswert f nach folgender Vorschrift ermitelt wird:

$$f = \sum_{i,j=1}^{N} \left\{ A_{ij} \cdot EEB_{ij} + \alpha_{ij} \cdot \left( EEB_{ij} - GOS_{ij} \right) \right\}, \text{ wobei}$$

$$\alpha_{ij} = \begin{cases} \beta_{ij}, \text{ falls } EEB_{ij} > GOS_{ij} \\ 0, \text{ sonst} \end{cases}$$

   mit

   - i, j Knotenindizes bezeichnet werden,
   - N eine Anzahl berückichtigter Knoten bezeichnet wird,
   - $A_{ij}$ ein Verkehrsangebot in Form einer Verkehrsmatrix bezeichnet wird,

- $\beta_{ij}$ vorgebbare Gewichtsfaktoren bezeichnet werden,
- $EEB_{ij}$ eine Wahrscheinlichkeit dafür bezeichnet wird, daß eine für ein Ende-zu-Ende-Knotenpaar angeforderte Verbindung aufgrund einer Überlastung des Telekommunikationsnetzes nicht zustande kommt,
- $\alpha_{ij}$ vorgebbare Gewichtsfaktoren bezeichnet werden.

9. Verfahren nach einem der Ansprüche 4 bis 8,
bei dem der genetische Algorithmus in jeder Iteration folgende Schritte aufweist:

- es werden mindestens drei Gesamt-Routing-Tabellen ausgewählt,
- es werden für die Gesamt-Routing-Tabellen die Qualitätswerte ermittelt,
- die Gesamt-Routing-Tabellen mit dem kleinsten Qualitätswert wird ersetzt durch eine neue Gesamt-Routing-Tabelle, die sich aus einer Kombination der mindestens zwei anderen Gesamt-Routing-Tabellen ergibt,
- die Kombination erfolgt nach dem Prinzip des Mehrpunkt-Crossovers, und
- für die neue Gesamt-Routing-Tabelle wird ein Qualitätswert ermittelt.

10. Verfahren nach Anspruch 9,
bei dem jeder Eintrag der neuen Gesamt-Routing-Tabelle mit einer vorgebbaren Wahrscheinlichkeit in einer Iteration verändert wird.

11. Verfahren nach Anspruch 10,
bei dem die Veränderung derart erfolgt, daß der Eintrag durch einen Kennzeichnungswert ersetzt wird.

12. Verfahren nach einem der Ansprüche 4 bis 8,
bei dem der genetische Algorithmus das $(\mu + \lambda)$-Verfahren ist.

13. Vorrichtung zur Bildung einer Routing-Tabelle aus schleifenfreien Teil-Routing-Tabellen für ein Telekommunikationsnetz,
mit einer Prozessoreinheit, die derart eingerichtet ist, daß

- die schleifenfreien Teil-Routing-Tabellen zu mehreren Gesamt-Routing-Tabellen kombiniert werden,
- für die Gesamt-Routing-Tabellen folgende Verfahrensschritte durchgeführt werden, bis ein vorgebbares Abbruchkriterium erfüllt ist:

  -- es wird für jede Gesamt-Routing-Tabelle ein Qualitätswert ermittelt,
  -- es wird mindestens eine neue Gesamt-Routing-Tabelle gebildet,

- eine Gesamt-Routing-Tabelle als Routing-Tabelle ausgewählt wird.

14. Vorrichtung nach Anspruch 13,
bei der die Prozessoreinheit derart eingerichtet ist, daß

- zu Beginn des Verfahrens eine Menge schleifenfreier Teil-Routing-Tabellen gebildet wird, und
- die Ermittlung der Routing-Tabelle im Raum der Kombinationen aus Teil-Routing-Tabellen der Menge erfolgt.

15. Verfahren nach Anspruch 14,
bei der die Prozessoreinheit derart eingerichtet ist, daß mit vorgebbarer Wahrscheinlichkeit mindestens eine Teil-Routing-Tabelle der Menge verändert wird oder durch mindestens eine neu generierte Teil-Routing-Tabelle ersetzt wird.

16. Vorrichtung nach einem der Ansprüche 13 bis 15,
bei der die Prozessoreinheit derart eingerichtet ist, daß die iterativen Verfahrensschritte gemäß einem genetischen Algorithmus erfolgen.

17. Vorrichtung nach Anspruch 16,
bei der die Prozessoreinheit derart eingerichtet ist, daß

- jedem Quellknoten/Zielknoten-Paar mehrere schleifenfreie Teil-Routing-Tabellen zugeordnet werden,
- die Teil-Routing-Tabellen mit einem Kennzeichnungswert eindeutig markiert werden,

- von jedem Quellknoten/Zielknoten-Paar Teil-Routing-Tabelle mit gleichem Kennzeichnungswert zu Gesamt-Routing-Tabelle kombiniert werden,
- ein Durchschnittswert aller Qualitätswerte ermittelt wird,
- die Gesamt-Routing-Tabelle, deren Qualitätswert unter einer vorgebbaren unteren Schranke liegt, gelöscht wird.

18. Vorrichtung nach einem der Ansprüche 13 bis 17,
bei der die Prozessoreinheit derart eingerichtet ist, daß der Qualitätswert f nach folgender Vorschrift ermitelt wird:

$$f = \sum_{i,j=1}^{N} A_{ij} \cdot EEB_{ij}, \text{ wobei mit}$$

- i, j Knotenindizes bezeichnet werden,
- N eine Anzahl berückichtigter Knoten bezeichnet wird,
- $A_{ij}$ ein Verkehrsangebot in Form einer Verkehrsmatrix bezeichnet wird,
- $EEB_{ij}$ eine Wahrscheinlichkeit dafür bezeichnet wird, daß eine für ein Ende-zu-Ende-Knotenpaar angeforderte Verbindung aufgrund einer Überlastung des Telekommunikationsnetzes nicht zustande kommt.

19. Vorrichtung nach einem der Ansprüche 13 bis 18,
bei der die Prozessoreinheit derart eingerichtet ist, daß bei der Netzkonfiguration geforderte Grade-of-Service-Werte eingehalten werden.

20. Vorrichtung nach Anspruch 19,
bei der die Prozessoreinheit derart eingerichtet ist, daß die Einhaltung der Grade-of-Service-Werte $GOS_{ij}$ durch Berücksichtigung folgender Nebenbedingung erfolgt:

$$EEB_{ij} \leq GOS_{ij} \; \forall \; (i,j)$$

und der Qualitätswert f nach folgender Vorschrift ermitelt wird:

$$f = \sum_{i,j=1}^{N} \left\{ A_{ij} \cdot EEB_{ij} + \alpha_{ij} \cdot \left( EEB_{ij} - GOS_{ij} \right) \right\}, \text{ wobei}$$

$$\alpha_{ij} = \begin{cases} \beta_{ij}, \text{ falls } EEB_{ij} > GOS_{ij} \\ 0, \text{ sonst} \end{cases}$$

mit

- i, j Knotenindizes bezeichnet werden,
- N eine Anzahl berückichtigter Knoten bezeichnet wird,
- $A_{ij}$ ein Verkehrsangebot in Form einer Verkehrsmatrix bezeichnet wird,
- $\beta_{ij}$ vorgebbare Gewichtsfaktoren bezeichnet werden,
- $EEB_{ij}$ eine Wahrscheinlichkeit dafür bezeichnet wird, daß eine für ein Ende-zu-Ende-Knotenpaar angeforderte Verbindung aufgrund einer Überlastung des Telekommunikationsnetzes nicht zustande kommt,
- $\alpha_{ij}$ vorgebbare Gewichtsfaktoren bezeichnet werden.

21. Vorrichtung nach einem der Ansprüche 16 bis 20,
bei der die Prozessoreinheit derart eingerichtet ist, daß der genetische Algorithmus in jeder Iteration folgende Schritte aufweist:

- es werden mindestens drei Gesamt-Routing-Tabellen ausgewählt,
- es werden für die Gesamt-Routing-Tabellen die Qualitätswerte ermittelt,
- die Gesamt-Routing-Tabellen mit dem kleinsten Qualitätswert wird ersetzt durch eine neue Gesamt-Routing-Tabelle, die sich aus einer Kombination der mindestens zwei anderen Gesamt-Routing-Tabellen ergibt,
- die Kombination erfolgt nach dem Prinzip des Mehrpunkt-Crossovers, und
- für die neue Gesamt-Routing-Tabelle wird ein Qualitätswert ermittelt.

22. Vorrichtung nach Anspruch 21,
    bei der die Prozessoreinheit derart eingerichtet ist, daß jeder Eintrag der neuen Gesamt-Routing-Tabelle mit einer vorgebbaren Wahrscheinlichkeit in einer Iteration verändert wird.

23. Vorrichtung nach Anspruch 22,
    bei der die Prozessoreinheit derart eingerichtet ist, daß die Veränderung derart erfolgt, daß der Eintrag durch einen Kennzeichnungswert ersetzt wird.

24. Vorrichtung nach einem der Ansprüche 16 bis 19,
    bei der die Prozessoreinheit derart eingerichtet ist, daß der genetische Algorithmus das $(\mu + \lambda)$-Verfahren ist.

## FIG 1

## FIG 2

FIG 3

Ebene 0

Zf

KNi

Ebene 1

Q1

Q2

Ebene 2

Ebene 3

FIG 4

Transitknoten

Zf

R

Qe

R

U

# FIG 5

Zielknoten auswählen — 501

Zuordnung eines Potentialwerts zu Zielknoten — 502

Auswahl eines Knotens ohne Potentialwert,
der einen Nachbarknoten mit Potentialwert besitzt — 503

Zuordnung eines Potentialwerts
zu ausgewähltem Knoten;
Potentialwert ist größer als der
Potentialwert des bereits mit einem
Potentialwert vesehenen Nachbarknotens — 504

505
Allen Knoten
einen Potentialwert
zugeordnet?          nein

ja

Bildung einer
Teil-Touting-Tabelle — 506

## FIG 6

Kennziffern der EEP-Tabellen

1    2    3    ...    10

T

$(i,j) = (2, 1)$

EEP's

(3,1)

(4,1)

(5,1)

## FIG 9

BS

R

P ⟷ BU ⟷ Rij

SP

TA

MA

# FIG 7

| | |
|---|---|
| Bildung schleifenfreier Teil-Routing-Tabellen | ~701 |

↓

| | |
|---|---|
| Bildung und Kennzeichnung von Gesamt-Routing Tabellen aus Teil-Routing-Tabellen (Initialisierung einer Population) | ~702 |

↓

| | |
|---|---|
| Auswählen von 3 Individuen (Gesamt-Routing-Tabellen) | ~703 |

↓

| | |
|---|---|
| Ermittlung der Qualitätswerte für Gesamt-Routing-Tabellen | ~704 |

↓

| | |
|---|---|
| Ersetzung des schlechtesten Individuums durch Kombination der beiden besseren Individuen mittels Mehrpunkt-Crossover | ~705 |

↓

| | |
|---|---|
| Mutation des neuen Individuums | ~706 |

↓

| | |
|---|---|
| Ermitteln des Qualitätswerts für das neue Individuum | ~707 |

↓

Nein ← vorgebbare Anzahl Iterationen erfolgt ? ~708

↓ Ja

| | |
|---|---|
| Bestes Individuum ist Routing-Tabelle | ~709 |

# FIG 8

Bildung schleifenfreier Teil-Routing-Tabellen — 701

Initialisierung einer Population — 702

704

Ermittlung der Qualitätswerte für Gesamt-Routing-Tabellen (Individuen) — 704

Selektion der μ besten Individuen — 801

Ersetzung der Menge von Teil-Routing-Tabellen durch diejenigen Teil-Routing-Tabellen, aus denen die μ besten Individuen zusammengesetzt sind — 802

Auswählen von 2 "Eltern"- Individuen — 803

Bildung eines neuen Individuums durch Kombination der Eltern-Individuen — 804

Mutation des neuen Individuums — 805

Ermitteln des Qualitätswerts für das neue Individuum — 806

Vorgebbare Anzahl λ von Iterationen erfolgt ? — 807

μ Eltern-Individuen und λ neue Individuen bilden neue Generation — 808

Vorgebbare Anzahl Generationen bearbeitet ? — 809

Bestes Individuum ist Routing-Tabelle — 810

Europäisches
Patentamt

**EUROPÄISCHER RECHERCHENBERICHT**

Nummer der Anmeldung

EP 98 11 2861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | HILLERMEIER C ET AL: "OPTIMAL ROUTING IN PRIVATE NETWORKS USING GENETIC ALGORITHMS" INTERNATIONAL SWITCHING SYMPOSIUM, Bd. 1, 21. - 26. September 1997, Seiten 523-531, XP000720560 Toronto (CA) * das ganze Dokument * | 1-24 | H04Q3/66 H04L12/56 |
| A | GB 2 299 729 A (NORTHERN TELECOM LIMITED) 9. Oktober 1996 * das ganze Dokument * | 1-24 | |
| A | NORIO SHIMAMOTO ET AL: "A DYNAMIC ROUTING CONTROL BASED ON A GENETIC ALGORITHM" PROCEEDINGS OF THE IEEE INTERNATIONAL CONFERENCE ON NEURAL NETWORKS , Bd. II, 28. März 1993 - 1. April 1993, Seiten 1123-1128, XP000371055 San Francisco (US) * das ganze Dokument * | 1-24 | |
| A | NAKAMURA H ET AL: "OPTIMIZATION OF FACILITY PLANNING AND CIRCUIT ROUTING FOR SURVIVABLE TRANSPORT NETWORKS - AN APPROACH BASED ON GENETIC ALGORITHM AND INCREMENTAL ASSIGNMENT" IEICE TRANSACTIONS ON COMMUNICATIONS, Bd. E80-B, Nr. 2, Februar 1997, Seiten 240-251, XP000721904 * Absatz 3.1 * | | RECHERCHIERTE SACHGEBIETE (Int.Cl.6) H04Q H04L |

Der vorliegende Recherchenbericht wurde für alle Patentansprüche erstellt

| Recherchenort | Abschlußdatum der Recherche | Prüfer |
|---|---|---|
| DEN HAAG | 2. November 1998 | De Muyt, H |

EPO FORM 1503 03 82 (P04C03)